# EUROPEAN PATENT APPLICATION

(11) **EP 4 847 245 A1**
(43) Date of publication of application: **02.12.2026**
(21) Application number: 25745206.0
(22) Date of filing: 23.01.2025
(51) Int. Cl.: B32B 27/00, B32B 27/10, B32B 27/20, B32B 27/30

(54) **DECORATIVE SHEET**

(30) Priority: 24.01.2024 JP 2024008962
(71) Applicant: Toppan Holdings Inc., Tokyo 110-0016 (JP)
(72) Inventor: MURATA, Daisuke, Tokyo 110-0016 (JP); AKUTSU, Erika, Tokyo 110-0016 (JP)
(74) Representative: TBK
(86) International application number: PCT/JP2025/002099
(87) International publication number: WO 2025/159164

(57) **Abstract**

The disclosure provides a decorative sheet having excellent water resistance, low gloss properties, and scratch resistance. A decorative sheet (1) includes a primary film layer (2) containing paper; a pigment-containing layer (3) provided on the primary film layer (2) and containing a pigment and a cured product of a first ionizing radiation curable resin; and a surface protective layer (4) provided on the pigment-containing layer (3), wherein the surface protective layer (4) contains a cured product of a second ionizing radiation curable resin as a cured resin and has a surface provided with an uneven structure including a plurality of ridge portions each protruding in a ridge shape; and the uneven structure has a ratio RSm/Ra in the range of 10 or more and 800 or less, the ratio RSm/Ra being a ratio between an average length RSm of roughness curve elements and an arithmetic mean roughness Ra.

## Description

### [Technical Field]

The present invention relates to decorative sheets.

### [Background Art]

Decorative sheets are used, for example, to decorate the surfaces of interior and exterior materials such as fittings, furniture, furnishing materials, and flooring materials, for the purpose of imparting aesthetic properties and durability to these materials. In general, decorative sheets are widely used in the form of decorative panels in which the decorative sheets are attached to the surfaces of substrates such as wood, wood boards, metal plates, non-flammable boards, paper substrates, or resin substrates via an adhesive or the like.

Aesthetic properties are imparted, for example, by forming patterns such as wood grain or stone grain using various printing methods. Decorative sheets having plain colors without patterns are sometimes preferred. The choice of patterned or not patterned, or the choice of pattern type varies depending on the purposes and preferences.

Surface gloss is also important for the aesthetic properties of the decorative sheets. There are a variety of decorative sheets to choose from depending on the purposes and preferences, ranging from decorative sheets having mirror-like high gloss to decorative sheets having low gloss with no reflection at all.

As mentioned above, imparting durability is an important function of decorative sheets, in addition to imparting aesthetic properties. Durability is a comprehensive evaluation of scratch resistance or stain resistance, and whether these characteristics can be maintained over a long period of time. Although requirements may vary depending on the environment and circumstances in which the decorative sheets are used, decorative sheets with high performance are always in demand.

To impart durability, a surface protective layer is formed, in general, on the outermost surface of decorative sheets. To adjust gloss mentioned above, or to achieve low gloss in particular, it is common to add a matting agent (matting additive) to the surface protective layer.

Furthermore, decorative sheets preferably have processability such that they can withstand such processes as cutting or bending which are generally performed when forming decorative materials such as decorative panels.

For example, such a decorative sheet designed in consideration of aesthetic properties (low gloss), scratch resistance, and stain resistance is described in PTL 1.

### [Citation List]

### [Patent Literature]

PTL 1: JP2019119138A

### [Summary of the Invention]

The present invention aims to provide a decorative sheet having excellent water resistance, low gloss properties, and scratch resistance.

According to an aspect of the present invention, there is provided a decorative sheet, including a primary film layer containing paper; a pigment-containing layer provided on the primary film layer and containing a pigment and a cured product of a first ionizing radiation curable resin; and a surface protective layer provided on the pigment-containing layer, wherein the surface protective layer contains a cured product of a second ionizing radiation curable resin as a cured resin and has a surface provided with an uneven structure including a plurality of ridge portions each protruding in a ridge shape; and the uneven structure has a ratio RSm/Ra in a range of 10 or more and 800 or less, the ratio RSm/Ra being a ratio between an average length RSm of roughness curve elements and an arithmetic mean roughness Ra.

According to another aspect of the present invention, there is provided the decorative sheet according to the above aspect, wherein the first ionizing radiation curable resin contains an acrylate.

According to still another aspect of the present invention, there is provided the decorative sheet according to any of the above aspects, wherein the pigment-containing layer has a thickness in the range of 0.5 µm or more and 20 µm or less.

According to still another aspect of the present invention, there is provided the decorative sheet according to any of the above aspects, wherein the surface protective layer has a thickness in the range of 2 µm or more and 20 µm or less.

According to still another aspect of the present invention, there is provided the decorative sheet according to any of the above aspects, wherein the pigment-containing layer and the surface protective layer have a total thickness in the range of 3 µm or more and 40 µm or less.

According to still another aspect of the present invention, there is provided the decorative sheet according to any of the above aspects, wherein when a mass of the first ionizing radiation curable resin is 100 parts by mass, a mass of the pigment is 3 parts by mass or more and 50 parts by mass or less.

According to still another aspect of the present invention, there is provided the decorative sheet according to any of the above aspects, wherein the pigment comprises titanium oxide.

According to still another aspect of the present invention, there is provided the decorative sheet according to any of the above aspects, wherein the second ionizing radiation curable resin contains an acrylate.

According to still another aspect of the present invention, there is provided the decorative sheet according to the above aspect, wherein the second ionizing radiation curable resin contains a bifunctional or higher acrylate including a repeating structure.

According to still another aspect of the present invention, there is provided the decorative sheet according to the above aspect, wherein the number of repeat units of the repeating structure is 3 or greater.

According to still another aspect of the present invention, there is provided the decorative sheet according to the above aspect, wherein the number of repeat units of the repeating structure is 30 or less.

According to still another aspect of the present invention, there is provided the decorative sheet according to the above aspect, wherein the surface protective layer further contains particles having an average particle size of 10 µm or less.

According to still another aspect of the present invention, there is provided the decorative sheet according to the above aspect, wherein when a mass of the second ionizing radiation curable resin is 100 parts by mass, a mass of the particles is in the range of 0.5 parts by mass or more and 20 parts by mass or less.

According to still another aspect of the present invention, there is provided the decorative sheet according to the above aspect, wherein the surface protective layer has a gloss of 20.0 or less.

According to still another aspect of the present invention, there is provided a decorative material, including the decorative sheet according any of the above aspects; and a substrate to which the decorative sheet is attached.

According to still another aspect of the present invention, there is provided a method of producing a decorative sheet, including forming a first coating film on a primary film layer containing paper, the first coating film containing a pigment and a first ionizing radiation curable resin; forming a second coating film on the first coating film, the second coating film containing a second ionizing radiation curable resin as a resin; and irradiating the second coating film with ionizing radiation or UV light to fully cure the second coating film.

According to still another aspect of the present invention, there is provided the method of producing a decorative sheet according to the above aspect, wherein fully curing the second coating film includes a first irradiation step of irradiating the second coating film with light having a wavelength of 200 nm or less; and a second irradiation step of subsequently irradiating the second coating film either with ionizing radiation or with UV light having a wavelength longer than that of the light used in the first irradiation step.

According to the present invention, there is provided a decorative sheet having excellent water resistance, low gloss properties, and scratch resistance.

### [Brief Description of the Drawings]

Fig. 1 is a cross-sectional view illustrating a decorative material including a decorative sheet according to an embodiment of the present invention.
Fig. 2 is a cross-sectional view illustrating a surface protective layer included in the decorative sheet of Fig. 1.
Fig. 3 is a microscopic image of a surface protective layer included in a decorative sheet according to an example of the present invention.
Fig. 4 is a cross-sectional view which is a partial enlargement of the surface protective layer shown in Fig. 2.

### [Description of the Embodiments]

Referring to the drawings, some embodiments of the present invention will be described. The embodiments described below are more specific implementations of any of the aspects set forth above. The matters described below can be incorporated into the aspects set forth above, either alone or in combination.

The embodiments described below are merely example configurations for embodying the technical idea of the present invention, and the technical idea of the present invention should not limit the materials, shapes, structures, and the like of the components to those described below. Various modifications can be added to the technical idea of the present invention within the technical scope recited in the claims.

It should be noted that components having the same or similar functions are denoted by the same reference signs in the drawings referred to below, and redundant description is omitted. The drawings are only schematic, and the relationships between dimensions in one direction and another direction, dimensions of a component and another component, and the like may be different from actual relationships.

### <1> Decorative material and decorative sheet

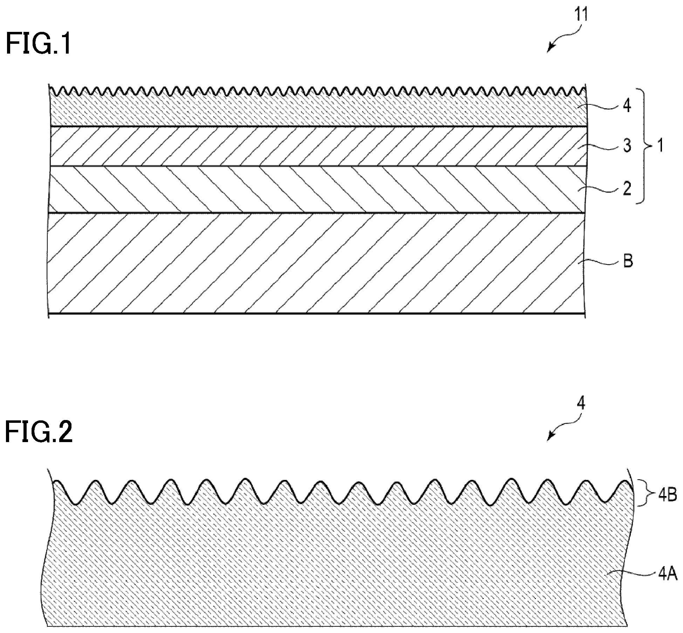

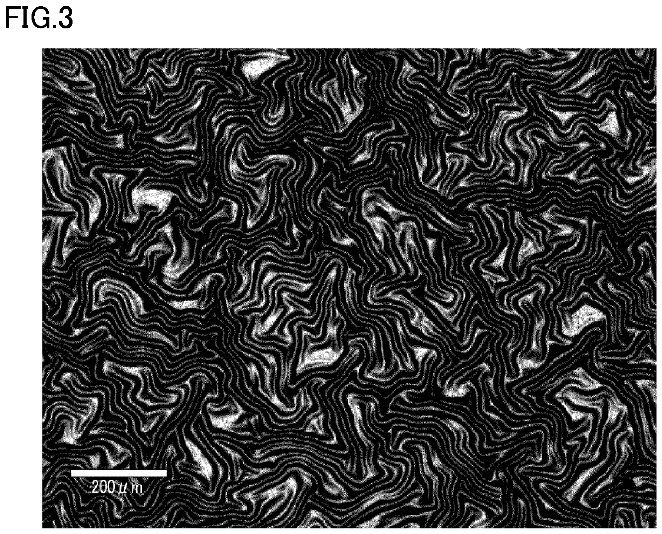

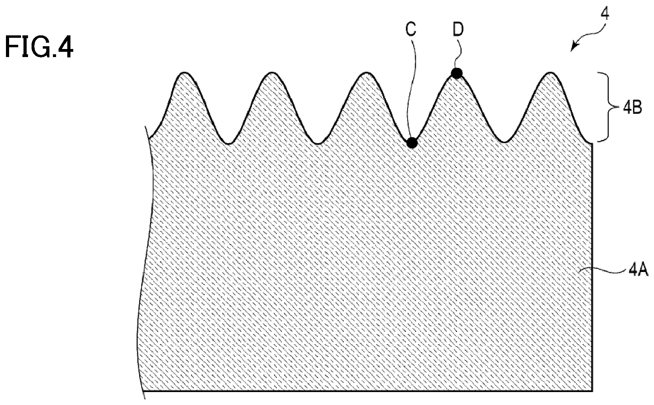

Fig. 1 is a cross-sectional view illustrating a decorative material including a decorative sheet according to an embodiment of the present invention. Fig. 2 is a cross-sectional view illustrating a surface protective layer included in the decorative sheet of Fig. 1. Fig. 3 is a microscopic image of a surface layer included in a decorative sheet according to an example of the present invention. Fig. 4 is a cross-sectional view which is a partial enlargement of the surface protective layer shown in Fig. 2.

The cross sections shown in Figs. 2 and 4 are taken along the thickness direction of the surface protective layer. The microscopic image shown in Fig. 3 is a plan-view image captured using a laser microscope (OLS-4000 manufactured by Olympus Corporation).

A decorative material 11 shown in Fig. 1 includes a substrate B and a decorative sheet 1 attached to the substrate B. The decorative material 11 in this example is a decorative panel. The decorative panel may be flat, or may be curved or folded. The decorative material 11 may have other shapes than a plate shape.

The substrate B in this example is a board material. The board material may, for example, be a wood board, inorganic board, metal board, or composite board made of multiple materials. The substrate B may have other shapes than a plate shape.

The decorative sheet 1 includes a primary film layer 2, a pigment-containing layer 3, and a surface protective layer 4. The pigment-containing layer 3 and the surface protective layer 4 are provided in this order on the surface of the primary film layer 2 facing away from the surface facing the substrate B. The decorative sheet 1 may further include one or more layers such as a transparent resin layer.

The components included in the decorative sheet 1 will be sequentially described below.

### <1.1> Primary film layer

The primary film layer 2 contains paper. The primary film layer 2 may have a single-layer structure, or may have a multilayer structure. According to an example, the entirety of the primary film layer 2 may be made of paper. According to another example, the primary film layer 2 may have a multilayer structure in which at least the outermost layer facing the surface protective layer 4 is made of paper. The primary film layer 2, if it has a multilayer structure, may include at least one layer made of a material other than paper, in addition to at least one layer made of paper.

Examples of the paper include tissue paper, resin-mixed paper, titanium paper, resin-impregnated paper, flame-resistant paper, and inorganic paper. The paper contained in the primary film layer 2 may be, for example, paper containing cellulose fibers. The primary film layer 2 can have various shapes such as a film shape, sheet shape, plate shape, and molded body.

### <1.2> Pigment-containing layer

The pigment-containing layer 3 may be, for example, a continuous film covering one entire surface of the primary film layer 2. The pigment-containing layer 3 can function as a concealing layer that conceals the substrate B or the primary film layer 2. The pigment-containing layer 3 can also function as a flattening layer.

The pigment-containing layer 3 contains a pigment and a cured product of a first ionizing radiation curable resin. According to an example, the pigment-containing layer 3 may contain only the first ionizing radiation curable resin as a cured resin. According to another example, the pigment-containing layer 3 may contain the first ionizing radiation curable resin and a thermosetting resin as cured resins. The term ionizing radiation may refer to charged particle beams such as electron beams. The first ionizing radiation curable resin is cured by ionizing radiation irradiation. The first ionizing radiation curable resin can also be cured by UV light irradiation. The thermosetting resin will be described later.

If the mass of the pigment-containing layer 3 is 100 parts by mass, the mass of the cured product of the first ionizing radiation curable resin contained in the pigment-containing layer 3 is preferably 50 parts by mass or more and 97 parts by mass or less, and more preferably 60 parts by mass or more and 95 parts by mass or less.

As the first ionizing radiation curable resin, known resins, such as various monomers and commercially available oligomers, can be used, examples of which include (meth)acrylic resins, silicone-based resins, polyester-based resins, urethane-based resins, amide-based resins, and epoxy-based resins. The first ionizing radiation curable resin may be either an aqueous resin or a non-aqueous (organic solvent-based) resin. The first ionizing radiation curable resin may be a solvent-free resin. The first ionizing radiation curable resin preferably contains an acrylate.

According to an example, the first ionizing radiation curable resin may be an aqueous dispersion or emulsion containing at least either of a urethane acrylate and a polyurethane resin. As the dispersion or emulsion, for example, one containing a resin having an acryloyl group can be used.

According to another example, the first ionizing radiation curable resin may be a mixture of an acrylate and a methacrylate. If the above mixture is used as the first ionizing radiation curable resin, high adhesion can be achieved between the pigment-containing resin 3 and the surface protective layer 4.

The cured product of the first ionizing radiation curable resin preferably contains one or more selected from the group consisting of urethane bonds, carbonate bonds, and amide bonds.

As described above, the pigment-containing layer 3 may contain the first ionizing radiation curable resin and a thermosetting resin as cured resins. According to an example, the thermosetting resin may contain one or more of an aqueous urethan dispersion, aqueous epoxy dispersion, and aqueous polyamine dispersion. As the aqueous dispersion, for example, one containing a carboxylic acid derivative with a polycarbonate skeleton can be used.

If an aqueous dispersion or emulsion is used as at least either of the first ionizing radiation curable resin and the thermosetting resin, surfactants may remain in the pigment-containing layer 3 as a result.

As will be described later, additives to be added to the first ionizing radiation curable resin are for enhancing functionality of the final product, and may include, for example, at least one of antibacterial agents, antifungal agents, UV absorbers, and photostabilizers. The total mass of the additives is preferably 15 parts by mass or less, and more preferably 10 parts by mass or less relative to 100 parts by mass of the first ionizing radiation curable resin.

The pigment contains at least one of a white pigment and a colored pigment. Examples of the pigment include inorganic pigments such as carbon black, titanium oxide (titanium white), zinc white, rouge, chrome yellow, Prussian blue, and cadmium red; organic pigments such as azo pigments, lake pigments, anthraquinone pigments, phthalocyanine pigments, isoindolinone pigments, and dioxazine pigments; and mixtures thereof. The pigment preferably comprises titanium oxide.

The average particle size of the pigment is preferably in the range of 50 nm or more and 5 µm or less, and more preferably in the range of 100 nm or more and 1 µm or less. This average particle size corresponds to the median diameter (D50) described later for the particles of the surface protective layer 4.

The mass of the pigment is preferably in the range of 3 parts by mass or more and 50 parts by mass or less, and more preferably in the range of 5 parts by mass or more and 30 parts by mass or less relative to 100 parts by mass of the first ionizing radiation curable resin. If the mass of the pigment is small, the effect of concealing the substrate B or the primary film layer 2, i.e., concealability, may tend to be deteriorated. For example, if the above mass is less than 3 parts by mass, it may be difficult to achieve high concealability. If the above mass is greater than 50 parts by mass, uniformity of the coating film may be deteriorated.

The thickness of the pigment-containing layer 3 is preferably in the range of 0.5 µm or more and 20 µm or less, more preferably in the range of 2 µm or more and 15 µm or less, and even more preferably in the range of 3 µm or more and 10 µm or less. If the thickness of the pigment-containing layer 3 is excessively small, high concealability may tend to be difficult to achieve. A pigment-containing layer 3 with an increased thickness may deteriorate formability of the decorative sheet 1 and may easily cause blushing when bent.

### <1.4> Surface protective layer

The surface protective layer 4 is provided on the pigment-containing layer 3. In this example, the surface protective layer 4 covers the entire upper surface of the pigment-containing layer 3.

The surface protective layer 4 preferably has a specular gloss GS (60°) of 20.0 or less, more preferably 18 or less, and even more preferably 15 or less. According to an example, the specular gloss GS (60°) of the surface protective layer 4 may be 0.5 or more. The specular gloss GS (60°) refers to a specular gloss measured at an incidence angle of 60 degrees using a gloss meter conforming to ISO 2813. The specular gloss GS (60°) may sometimes be expressed by adding % after the numerical value; however, % is omitted in this example.

The surface protective layer 4 has a surface provided with an uneven structure. The uneven structure provided to the upper surface of the surface protective layer 4 has a function of reducing the specular gloss GS (60°) of the surface protective layer 4.

In this example, the surface of the surface protective layer 4 is provided with an uneven structure including multiple ridge portions each protruding in a ridge shape. Specifically, as shown in Figs. 2 and 4, the surface protective layer 4 includes a core portion 4A that is a thin layer having a flat upper surface, and multiple ridge portions 4B each protruding in a ridge shape from the upper surface of the core 4A.

In the present disclosure, the ridge portions 4B may refer to, for example, the portions from the lowest parts to the tips of the convexities provided on the surface of the surface protection layer 4, and the core portion 4A may refer to the portion of the surface protective layer 4 excluding the ridge portions 4B. The ridge shape refers to a linearly extending convexity in plan view.

The ridge portions 4B may be curved or straight in plan view, but are preferably curved as shown in Fig. 3 from the perspective of fingerprint resistance on the surface of the decorative sheet 1. As will be described later, the surface protective layer 4 having the ridge portions 4B can be formed, for example, by applying light of a specific wavelength to the surface of a coating film containing a second ionizing radiation curable resin, and expanding the cured film formed on the surface of the coating film in the in-plane direction.

The uneven structure on the upper surface of the surface protective layer 4 preferably has a ratio RSm/Ra in the range of 10 or more and 800 or less between an average length RSm of roughness curve elements and an arithmetic mean roughness Ra. The ratio RSm/Ra is preferably in the range of 10 or more and 600 or less, more preferably in the range of 10 or more and 500 or less, even more preferably in the range of 10 or more and 400 or less, even more preferably in the range of 50 or more and 400 or less, and even more preferably in the range of 50 or more and 350 or less. The smaller the ratio RSm/Ra, the smaller the pitch of the convexities. Consequently, any contamination attached to the surface of the decorative sheet 1 becomes difficult to wipe off, deteriorating stain resistance. The larger the ratio RSm/Ra, the larger the pitch of the convexities, and the effect of the uneven structure to reduce the specular gloss GS (60°) of the surface protective layer 4 becomes smaller.

The ratio RSm/Ra is preferably 80 or more. The larger the ratio RSm/Ra, the larger the pitch of the convexities, and the affinity of water or a cleaning agent (water containing a surfactant or alcohol) to the upper surface of the surface protective layer 4 is improved accordingly. As long as the decorative sheet 1 includes a surface protective layer 4 having such a surface texture, contamination can be easily wiped off using water or a cleaning agent even when the surface becomes contaminated.

The ratio RSm/Ra is most preferably 100 or more. If the ratio RSm/Ra is in this range, commonly available cleaning sponges can be brought into contact with the boundaries between the convexities and the regions in the vicinities thereof on the upper surface of the surface protective layer 4. Therefore, even if the surface of the decorative sheet 1 becomes contaminated, the contamination can be easily wiped off using commonly available cleaning sponges.

The arithmetic mean roughness Ra and the average length RSm of roughness curve elements are values of measurement using a line roughness gauge (according to JIS B 0601:2013).

The arithmetic mean roughness Ra is preferably in the range of 0.2 µm or more and 10.0 µm or less, more preferably in the range of 0.5 µm or more and 5.0 µm or less, and even more preferably in the range of 0.8 µm or more and 4.0 µm or less.

The average length RSm of roughness curve elements is preferably in the range of 50 µm or more and 800 µm or less, more preferably in the range of 80 µm or more and 600 µm or less, and even more preferably in the range of 100 µm or more and 500 µm or less.

The upper surface of the surface protective layer 4 may have a sinusoidal shape in a cross section parallel to the thickness direction and to the arrangement direction of the ridge portions 4B. The sinusoidal shape refers to a shape, as shown in Fig. 4, in which the line from the lowest point C of the ridge portions 4B to the highest point D (apex) can be expressed as a sine wave.

The thickness of the surface protective layer 4 is preferably in the range of 2 µm or more and 20 µm or less, more preferably in the range of 2.5 µm or more and 15 µm or less, and most preferably in the range of 3 µm or more and 12 µm or less. A surface protective layer 4 with a small thickness may make it difficult to achieve the surface texture described above using the method described below referring to the ratio RSm/Ra, etc. A surface protective layer 4 with a large thickness may deteriorate formability of the decorative sheet 1 and may easily cause blushing when bent.

The thickness of the surface protective layer 4 corresponds to the thickness of a layer having an apparent area and volume equal to those of the surface protective layer 4 and having a flat surface. The thickness of the surface protective layer 4 can be calculated, for example, using the following method. First, an image of a cross section of the surface protective layer 4 may be captured, which is taken along the direction parallel to the thickness direction and perpendicular to the length direction of the ridge portions 4B. Next, the dimension of the surface protective layer 4 in the width direction of the ridge portions 4B and the area of the cross section of the surface protective layer 4 may be calculated from the image of the cross section. The thickness of the surface protective layer 4 may be obtained by dividing the area by this dimension. If the surface protective layer-forming coating liquid described later does not contain a solvent, the thickness of the coating film formed of this coating liquid may be equal to the thickness of the surface protective layer 4.

In the thickness of the surface protective layer 4, the ratio between the thickness (or height) of the ridge portions 4B and the thickness of the core portion 4A (Thickness of ridge portions 4B / Thickness of core portion 4A) is preferably set so as to be in the range of 0.01 or more and 2.0 or less, and more preferably in the range of 0.1 or more and 1.0 or less.

The surface protective layer 4 contains a cured resin. As will be described later, the surface protective layer 4 can further contain particles. If the mass of the surface protective layer 4 is 100 parts by mass, the mass of the cured resin contained in the surface protective layer 4 is preferably 60 parts by mass or more, more preferably 70 parts by mass or more, and even more preferably 80 parts by mass or more.

The surface protective layer 4 contains only the cured product of the second ionizing radiation curable resin as a cured resin. According to an example, the surface protective layer 4 may contain only the cured product of the second ionizing radiation curable resin as a cured resin other than particles. According to another example, the surface protective layer 4 may contain only the cured product of the second ionizing radiation curable resin as a cured resin. As mentioned above, the ionizing radiation may refer to charged particle beams such as electron beams. The second ionizing radiation curable resin can be cured by ionizing radiation irradiation. The second ionizing radiation curable resin can also be cured by UV light irradiation. The second ionizing radiation curable resin used in this example can be cured by irradiation with light having a wavelength of 200 nm or less, while having a large absorption coefficient for this light.

As the second ionizing radiation curable resin, known resins, such as various monomers and commercially available oligomers, can be used, examples of which include (meth)acrylic resins, silicone-based resins, polyester-based resins, urethane-based resins, amide-based resins, and epoxy-based resins. The second ionizing radiation curable resin may be either an aqueous resin or non-aqueous (organic solvent-based) resin. The second ionizing radiation curable resin may be a solvent-free resin.

The second ionizing radiation curable resin preferably contains an acrylate as a main component. The term main component refers to the material being contained preferably at 60 parts by mass or more, more preferably 70 parts by mass or more, and most preferably 80 parts by mass or more, relative to 100 parts by mass of the resin composition.

The acrylate is preferably a bifunctional or higher acrylate, and more preferably a trifunctional or higher acrylate. From the perspective of obtaining a surface protective layer 4 having excellent scratch resistance, the acrylate is preferably a trifunctional or higher acrylate. There is no upper limit to the number of functional groups of the acrylate, but for example, it may be six or less.

The acrylate preferably contains a repeating structure. For example, the repeating structure may be any of an ethylene oxide (EO) structure, propylene oxide (PO) structure, and ε-caprolactone (CL) structure. It is preferable that the repeating structure is an ethylene oxide or propylene oxide structure. In the acrylate, the repeating structure can be present between the acryloyl group and the methylol group in an open ring state.

The number of repeat units of the repeating structure is preferably three or more. If an acrylate with a large number of repeat units is used, the cured film is likely to expand in the in-plane direction thereof in the second irradiation step described later, and therefore wrinkles corresponding to the ridge portions 4B are likely to appear on the surface of the coating film. However, if the number of repeat units is excessively large, the crosslink density may be reduced and the scratch resistance of the surface protective layer 4 may be deteriorated. If the repeat unit has hydrophilicity and the number of repeat units is excessively large, water that has come into contact with the surface protective layer 4 may easily soak into the surface protective layer 4. Accordingly, the number of repeat units is preferably 30 or less, and more preferably 20 or less.

The number of repeat units of the repeating structure can be analyzed using an MALDI-TOF-MS analysis. The ionizing radiation curable resin may have a molecular weight distribution. If there is a molecular weight distribution, the number of repeat units is taken to be the number of repeat units corresponding to the molecular weight having the most intense peak in the MALDI-TOF-MS mass spectrum.

The second ionizing radiation curable resin may be one type of acrylate or may be a mixture of two or more types of acrylate. For example, the second ionizing radiation curable resin may be a mixture of an acrylate containing a repeating structure and an acrylate not containing any repeating structure. In this case, the ratio RSm/Ra described above can be easily adjusted. A ratio M2/M1 that is a ratio of a mass M2 of an acrylate not containing any repeating structure to a mass M1 of an acrylate containing a repeating structure may be, for example, preferably 2.0 or less.

If the second ionizing radiation curable resin contains an acrylate, it may further contain a methacrylate.

The surface protective layer 4 can further contain particles in addition to the cured resin.

Examples of the particles that can be used contained in the surface protective layer 4 include particles of organic materials such as polyethylene (PE) wax, polypropylene (PP) wax, and resin beads, and particles of inorganic materials such as silica, glass, alumina, titania, zirconia, calcium carbonate, and barium sulfate.

The average particle size (D50) is preferably 10 µm or less, more preferably in the range of 1 µm or more and 8 µm or less, even more preferably in the range of 2 µm or more and 7 µm or less, and most preferably in the range of 3 µm or more and 6 µm or less. If the average particle size (D50) is increased, particles are likely to shed from the surface protective layer 4, and it may become difficult to achieve high scratch resistance. If particles with a small size are used, the effect of uniformly producing wrinkles may be reduced.

The average particle size or the average particle size (D50) refers to a median diameter (D50) measured using a laser diffraction/scattering particle size distribution analyzer. If the surface protective layer-forming coating liquid contains particles, the surface protective layer 4 obtained from this coating liquid also contains particles. In order to obtain the average particle size of the particles contained in the surface protective layer 4, the diameters of a plurality of particles are actually measured, while observing a cross section of the layer, and the measured diameters are averaged. The value obtained in this way is substantially the same as the median diameter (D50) measured using a laser diffraction/scattering particle size distribution measuring device. Therefore, the above range of the average particle size can also be interpreted as the range of average particle size of the particles contained in the surface protective layer 4.

The mass of the particles in the surface protective layer 4 is preferably in the range of 0.5 parts by mass or more and 20 parts by mass or less, more preferably in the range of 0.5 parts by mass or more and 10 parts by mass or less, even more preferably in the range of 2 parts by mass or more and 8 parts by mass or less, and even more preferably in the range of 2 parts by mass or more and 6 parts by mass or less relative to 100 parts by mass of the cured resin.

If the addition amount of the particles is in the above range, an especially high effect of uniformly producing wrinkles can be expected. If the addition amount of the particles is excessively large, particles are likely to shed from the surface protective layer 4, and it may become difficult to achieve high scratch resistance.

The total thickness of the pigment-containing layer 3 and the surface protective layer 4 is preferably in the range of 3 µm or more and 40 µm or less, and more preferably in the range of 4.5 µm or more and 30 µm or less. If the total thickness of these layers is in the above range, high water resistance can be achieved.

The thickness of the decorative sheet 1 is preferably in the range of 30 µm or more and 160 µm or less, and more preferably in the range of 50 µm or more and 130 µm or less. A decorative sheet 1 with a thickness in the above range can be easily bent and thus can achieve high formability.

### <2> Method of producing decorative sheet

For example, the decorative sheet 1 can be produced using the following method.

First, a first coating film containing a pigment and a first ionizing radiation curable resin is formed on one surface of a primary film layer 2 containing paper. In this case, the first coating film is formed so as to cover the entire upper surface of the primary film layer 2.

According to an example, the first coating film may be formed of only a mixture of a pigment and the first ionizing radiation curable resin. According to another example, the first coating film may be formed of only a mixture of a pigment, the first ionizing radiation curable resin, and an additive dissolved in these materials.

The first coating film is formed by applying a pigment-containing layer-forming coating liquid to the primary film layer 2. The first coating film can be formed, for example, using various printing methods such as gravure printing, offset printing, screen printing, electrostatic printing, and inkjet printing, and various coating methods such as roll coating, knife coating, microgravure coating, and die coating.

The pigment-containing layer-forming coating liquid contains the pigment mentioned above and the first ionizing radiation curable resin. The pigment-containing layer-forming coating liquid can further contain other components, e.g., a thermosetting resin, a solvent, and at least one of additives such as antibacterial agents and antifungal agents for improving the functionality of the final product. The pigment-containing layer-forming coating liquid can further contain other additives such as a UV absorber and a photostabilizer. As the UV absorber, for example, benzotriazole-based, benzoate-based, benzophenone-based, and triazine-based UV absorbers can be used. As the photostabilizer, for example, hindered amine-based photostabilizers can be used. If the pigment-containing layer-forming coating liquid contains a solvent, the first coating film described above is obtained by applying this coating liquid and drying the coating film.

Next, a first irradiation step is performed. In the first irradiation step, the first coating film is irradiated with first radiation to cure the first coating film. The first irradiation step may be performed so that the first coating film is completely cured or may be performed so that the first coating film is incompletely cured.

The first radiation may be ionizing radiation, for example. As described above, the ionizing radiation corresponds to charged particle beams such as electron beams. The first radiation may be UV light for which the first ionizing radiation curable resin shows a small absorption coefficient. The UV light applied to the first coating film preferably has a wavelength exceeding 200 nm, more preferably in the range of 230 nm or more and 450 nm or less, and even more preferably in the range of 250 nm or more and 400 nm or less.

By applying ionizing radiation or the above UV light to the first coating film, curing can be promoted substantially uniformly throughout the thickness of the first coating film. Therefore, unlike the second coating film described later, the cured first coating film has no convexities/concavities on the surface.

According to an example, the minimum integrated light quantity required for fully curing the first coating film may be in the range of 10 mJ/cm² or more and 1,000 mJ/cm² or less. According to an example, the minimum absorbed dose required for fully curing the first coating film may be in the range of 3 kGy or more and 200 kGy or less.

If the first coating film contains a thermosetting resin, the first coating film may be heated following the first irradiation step to induce a crosslinking reaction of the thermosetting resin. The heating is preferably performed at a temperature in the range of 80°C or more and 200°C or less, and more preferably in the range of 100°C or more and 160°C or less. Even when the first coating film contains a thermosetting resin, the first coating film does not have to be heated immediately after the first irradiation step.

The first irradiation step may be omitted. For example, if the first coating film loses its fluidity due to drying or heating, the first irradiation step may be omitted.

Next, a second coating film made of a surface protective layer-forming coating liquid is formed on the cured first coating film. In this case, the second coating film is formed so as to cover the entire upper surface of the first coating film.

The second coating film can be formed, for example, using various printing methods such as gravure printing, offset printing, screen printing, electrostatic printing, and inkjet printing, and various coating methods such as roll coating, knife coating, microgravure coating, and die coating.

The surface protective layer-forming coating liquid contains the second ionizing radiation curable resin mentioned above. As mentioned above, according to an example, the second ionizing radiation curable resin is an acrylate. According to another example, the second ionizing radiation curable resin may be a mixture of an acrylate and a methacrylate.

The surface protective layer-forming coating liquid can further contain other components, e.g., the above particles, a solvent, and at least one of additives such as antibacterial agents and antifungal agents for improving the functionality of the final product. The surface protective layer-forming coating liquid can further contain other additives such as UV absorbers and photostabilizers. As the UV absorber, for example, benzotriazole-based, benzoate-based, benzophenone-based, and triazine-based UV absorbers can be used. As the photostabilizer, for example, hindered amine-based photostabilizers can be used.

Next, the second coating film is irradiated with ionizing radiation or UV light to completely cure the second coating film. For example, the second and third irradiation steps described below may be sequentially performed.

In the second irradiation step, the second coating film may be irradiated with second radiation. The second radiation is light having a wavelength of 200 nm or less.

The second ionizing radiation curable resin contained in the surface protective layer-forming coating liquid has a large absorption coefficient for the second radiation. For this reason, the second radiation incident on the second coating film can only reach the depth of several tens to several hundreds of nm from the outermost surface of the film. Therefore, in the second irradiation step, the crosslinking reaction proceeds in the surface region of the second coating film to form an extremely thin cured film, while in other regions, crosslinking reaction does not proceed and the coating film in the regions remains uncured.

The second coating film that has undergone the second irradiation step has wrinkles on the surface corresponding to the ridge portions 4B. The present inventors consider the reason why the wrinkles appear on the surface of the coating film due to the second irradiation step to be as follows.

As described above, the second radiation can only reach the depth of several tens to several hundreds of nm from the outermost surface of the second coating film. Specifically, the crosslinking reaction of the second ionizing radiation curable resin occurs only in the surface region of the second coating film, and the regions several tens to several hundreds of nm from the outermost surface remain uncured, where molecules with high fluidity may be present. Such highly fluid molecules may swell the cured film, increasing the volume of the cured film. The cured film may buckle due to the in-plane compressive stress caused by volume increase in the in-plane direction, whereby wrinkles may appear on the surface of the second coating film.

The second radiation can be extracted from excimer VUV (vacuum ultra violet) light. The excimer VUV light can be produced from a lamp that uses a noble gas or a noble gas halide compound. When electrons having high energy are externally applied to a lamp in which a noble gas or a gas of a noble gas halide compound is sealed, a large quantity of discharge plasma (dielectric barrier discharge) is generated. The atoms in the discharged gas (noble gas) are excited by this plasma discharge and instantaneously brought into an excimer state. When returning from the excimer state to the ground state, light in the wavelength range specific to the excimer is emitted.

Any gas used in the conventional art can be used as the gas for the excimer lamp as long as the gas generates light with a wavelength of 200 nm or less. The gas may be a noble gas, such as Xe, Ar and Kr, or a mixed gas of a noble gas and a halogen gas, such as ArBr and ArF. The wavelength (center wavelength) of light emitted from the excimer lamp depends on the gas. For example, the wavelength may be approximately 172 nm (Xe), approximately 126 nm (Ar), approximately 146 nm (Kr), approximately 165 nm (ArBr), and approximately 193 nm (ArF).

Considering the magnitude of photon energy or the difference between the wavelength and the binding energy of the organic materials, the light source to be used is preferred to be a xenon lamp emitting excimer light with a center wavelength of 172 nm. Also, considering the cost of maintaining the equipment, availability of materials, etc., a xenon lamp is preferably used as a light source.

The second irradiation step is performed under an atmosphere in which the oxygen concentration is low. Oxygen has a large absorption coefficient for light of 200 nm or less. Accordingly, for example, the second irradiation step may be preferably performed under a nitrogen gas atmosphere. The oxygen concentration in the gas phase in the second irradiation step, i.e., the residual oxygen concentration in the reaction atmosphere, is preferably 2,000 ppm or less, and more preferably 1,000 ppm or less.

Oxygen in the atmosphere inhibits radical polymerization. Therefore, the residual oxygen concentration in the reaction atmosphere affects the formation of wrinkles on the surface of the second coating film. Therefore, if the residual oxygen concentration in the reaction atmosphere is changed, the surface texture of the surface protective layer 4 may also change.

The integrated light quantity of the second radiation is preferably in the range of 0.5 mJ/cm² or more and 200 mJ/cm² or less, more preferably in the range of 1 mJ/cm² or more and 100 mJ/cm² or less, even more preferably in the range of 3 mJ/cm² or more and 50 mJ/cm² or less, and most preferably in the range of 5 mJ/cm² or more and 30 mJ/cm² or less. If the integrated light quantity is reduced, expansion of the cured film in the in-plane direction may be reduced. If the integrated light quantity is excessively increased, the surface texture of the second coating film may be deteriorated.

In the third irradiation step, the second coating film is irradiated with third radiation. The third radiation is ionizing radiation or UV light having a longer wavelength compared to that of the light applied in the second irradiation step. The third radiation may utilize that described above for the first radiation.

In the third irradiation step, a crosslinking reaction proceeds in the second coating film throughout the thicknesses of the film.

The integrated light quantity of the third radiation is preferably in the range of 10 mJ/cm² or more and 500 mJ/cm² or less, more preferably in the range of 50 mJ/cm² or more and 400 mJ/cm² or less, and even more preferably in the range of 100 mJ/cm² or more and 300 mJ/cm² or less.

Irradiation of the third radiation is preferably performed in such a way that the absorbed dose will be in the range of 5 kGy or more and 200 kGy or less, more preferably in the range of 10 kGy or more and 150 kGy or less, and even more preferably in the range of 15 kGy or more and 100 kGy or less.

In the third irradiation step, if it is difficult to obtain a sufficiently strong layer with irradiation of only one type of radiation, the type of the third radiation may be changed during the irradiation. For example, ionizing radiation may be applied first, and then UV light having a longer wavelength than that of the light applied in the second irradiation step may be applied. Alternatively, UV light having a longer wavelength than that of the light applied in the second irradiation step may be applied first, and then ionizing radiation may be applied. Alternatively, UV light having a longer wavelength than that of the light applied in the second irradiation step may be applied first, and then UV light having an even longer wavelength may be applied.

In this way, a decorative sheet 1 is obtained. In the decorative sheet 1 obtained using the above method, the core portion 4A and the ridge portions 4B are integrally formed with no interface therebetween.

### <3> Effects

The decorative sheet 1 described above can suppress occurrence of stains or traces of stains caused by water absorption, i.e., has water resistance. This will be described below.

As described above, the primary film layer 2 contains paper. Therefore, if the pigment-containing layer 3 is omitted and water attaches the surface protective layer 4, the water is absorbed by the paper contained in the primary film layer 2. The water-absorbed portions may be visible as stains. These water-absorbed portions, in which the paper shrinks in the drying process, may still be visible as traces of water absorption even after drying.

The surface protective layer 4 can impart some degree of water resistance to the decorative sheet 1. However, the thickness of the surface protective layer 4 is uneven due to having the uneven structure on the surface as described above. Therefore, in order to achieve high water resistance with the surface protective layer 4 alone, the minimum thickness thereof is required to be sufficiently increased. However, since the thickness of the second coating film can affect the surface texture of the surface protective layer 4, the thickness of the surface protective layer 4 cannot be determined considering only water resistance.

In this regard, the decorative sheet 1 described above includes the pigment-containing layer 3 containing a cured product of the first ionizing radiation curable resin. The first ionizing radiation curable resin has a higher crosslink density compared to the cured product of a resin such as a thermosetting resin. Therefore, even if the water attached to the surface protective layer 4 has reached the pigment-containing layer 3, the water does not permeate through the pigment-containing layer 3. Accordingly, the decorative sheet 1 described above can achieve high water resistance.

Furthermore, in the decorative sheet 1, the surface protective layer has a surface provided with an uneven structure. The uneven structure preferably has the ratio RSm/Ra, between the average length RSm of roughness curve elements and the arithmetic mean roughness Ra, in the above range. Such an uneven structure can achieve a low gloss.

In the decorative sheet 1 described above, the surface of the surface protective layer is provided with an uneven structure including multiple ridge portions each protruding in a ridge shape. Such an uneven structure can achieve high scratch resistance.

### Examples

Examples of the present invention will be described below. The term particle size described below refers to the average particle size (D50) described above.

### <Example 1>

A decorative sheet 1 described referring to Figs. 1 to 4 was prepared using the following method.

First, impregnated paper having a basis weight of 50 g/m² (GFR-506, manufactured by Kohjin Co., Ltd.) was prepared as the primary film layer 2.

Next, a pigment-containing layer-forming coating liquid having the following composition was applied to the primary film layer 2. The pigment-containing layer-forming coating liquid was applied so that the pigment-containing layer 3 had a thickness of 5 µm.

### (Pigment-containing layer-forming coating liquid)

### First ionizing radiation curable resin

Type: Aqueous UV curable resin
Product name: SHIKOH (trademark) UV-W300 (manufactured by Mitsubishi Chemical Corporation)

### Pigment

Type: Titanium oxide
Average particle size: 230 nm
Formulation: 15 parts by mass

After that, the first irradiation step was performed. Specifically, electron beams as ionizing radiation were applied to a first coating film made of the pigment-containing layer-forming coating liquid so that the absorbed dose of the first coating film was 3 kGy. Thus, the first coating film was cured.

Subsequently, a surface protective layer-forming coating liquid having the following composition was printed on the first coating film. The surface protective layer-forming coating liquid was printed so that the surface protective layer 4 had a thickness of 5 µm.

### (Surface protective layer-forming coating liquid>

### Second ionizing radiation curable resin

Type: Trimethylolpropane EO-modified triacrylate (6 moles of EO added)
Product name: Miramer M3160 (manufactured by Miwon)
Formulation: 100 parts by mass

### Particles

Product Name: SYLYSIA 250N (manufactured by Fuji Silysia Chemical Ltd.)
Particle size: 5 µm
Formulation: 0.5 parts by mass

Next, the second irradiation step was performed. Specifically, using an Xe excimer lamp, UV light having a wavelength of 172 nm was applied to the surface of a second coating film made of the surface protective layer-forming coating liquid so that the integrated light quantity was 50 mJ/cm², in a nitrogen gas atmosphere at atmospheric pressure in which the oxygen concentration was 500 ppm. Thus, wrinkles were produced on the surface of the second coating film.

Subsequently, the third irradiation step was performed. Specifically, the second coating film was irradiated with 100 kGy of ionizing radiation and the second coating film was completely cured to thereby form a surface protective layer 4.

In this way, a decorative sheet 1 was obtained.

### <Example 2>

A decorative sheet 1 described referring to Figs. 1 to 4 was prepared as in Example 1 except that the following resin was used as the second ionizing radiation curable resin and the surface protective layer 4 had a thickness of 20 µm.

### Second ionizing radiation curable resin

Type: trimethylolpropane EO-modified triacrylate (30 mol EO added)
Product name: NAM-AT30E (manufactured by Nagase America LLC)
Formulation: 100 parts by mass

### <Example 3>

A decorative sheet 1 described referring to Figs. 1 to 4 was prepared as in Example 1 except that the surface protective layer 4 had a thickness of 1 µm.

### <Example 4>

A decorative sheet 1 described referring to Figs. 1 to 4 was prepared as in Example 1 except that the following resin was used as the second ionizing radiation curable resin.

### Second ionizing radiation curable resin

Type: Ethoxylated trimethylolpropane triacrylate
Product name: A-TMPT-6PO (manufactured by Shin-Nakamura Chemical Co., Ltd.)
Formulation: 100 parts by mass

### <Example 5>

A decorative sheet 1 described referring to Figs. 1 to 4 was prepared as in Example 1 except that the following resin was used as particles.

### Particles

Product name: SYLYSIA 780 (manufactured by Fuji Silysia Chemical Ltd.)
Particle size: 11.3 µm
Formulation: 5 parts by mass

### <Example 6>

A decorative sheet 1 described referring to Figs. 1 to 4 was prepared as in Example 1 except that the pigment-containing layer 3 had a thickness of 1.5 µm.

### <Example 7>

A decorative sheet 1 described referring to Figs. 1 to 4 was prepared as in Example 1 except that the pigment-containing layer 3 had a thickness of 22 µm.

### <Example 8>

A decorative sheet 1 described referring to Figs. 1 to 4 was prepared as in Example 1 except that the following resin was used as the first ionizing radiation curable resin.

### First ionizing radiation curable resin

Type: Aqueous UV curable resin
Product name: UVPUD-7502E (manufactured by UBE Corporation)

### <Example 9>

A decorative sheet 1 described referring to Figs. 1 to 4 was prepared as in Example 1 except that a mixture of the following resins was used as the second ionizing radiation curable resin.

### Second ionizing radiation curable resin

### (First acrylate)

Type: Trimethylolpropane EO-modified triacrylate (6 moles of EO added)
Product name: Miramer M3160 (manufactured by Miwon)
Formulation: 60 parts by mass

### (Second acrylate)

Type: Dipentaerythritol hexaacrylate (DPHA)
Product name: ARONIX M-404 (manufactured by Toagosei Co., Ltd.)
Formulation: 40 parts by mass

### <Example 10>

A decorative sheet 1 described referring to Figs. 1 to 4 was prepared as in Example 1 except that a mixture of the following resins was used as the second ionizing radiation curable resin.

### Second ionizing radiation curable resin

### (First acrylate)

Type: Trimethylolpropane EO-modified triacrylate (6 moles of EO added)
Product name: Miramer M3160 (manufactured by Miwon)
Formulation: 40 parts by mass

### (Second acrylate)

Type: Dipentaerythritol hexaacrylate (DPHA)
Product name: ARONIX M-404 (manufactured by Toagosei Co., Ltd.)
Formulation: 60 parts by mass

### <Comparative Example 1>

A decorative sheet similar to the decorative sheet described referring to Figs. 1 to 4 was prepared as in Example 1 except that the second irradiation step was omitted and the surface protective layer-forming coating liquid was formulated to contain 20 parts by mass of particles.

### <Comparative Example 2>

A decorative sheet similar to the decorative sheet described referring to Figs. 1 to 4 was prepared as in Example 1 except that a mixture of the following resins was used as the second ionizing radiation curable resin and the surface protective layer 4 had a thickness of 1 µm.

### Second ionizing radiation curable resin

### (First acrylate)

Type: Trimethylolpropane EO-modified triacrylate (6 moles of EO added)
Product name: Miramer M3160 (manufactured by Miwon)
Formulation: 20 parts by mass

### (Second acrylate)

Type: Dipentaerythritol hexaacrylate (DPHA)
Product name: ARONIX M-404 (manufactured by Toagosei Co., Ltd.)
Formulation: 80 parts by mass

### <Comparative Example 3>

A decorative sheet similar to the decorative sheet described referring to Figs. 1 to 4 was prepared as in Example 1 except that the following resin was used instead of the first ionizing radiation curable resin.
Type: Aqueous acrylic dispersion
Product name: SETAQUA 6411 (manufactured by Daicel-Allnex Ltd.)
Formulation: 100 parts by mass

### <Comparative Example 4>

A decorative sheet similar to the decorative sheet described referring to Figs. 1 to 4 was prepared as in Example 1 except that the following resin was used instead of the first ionizing radiation curable resin.
Type: Thermosetting polyurethane resin
Product name: WS-5661 (manufactured by Mitsui Chemicals, Inc.)
Formulation: 100 parts by mass

### <Evaluation>

The above decorative sheets were evaluated as follows. The decorative sheets evaluated as AAA, AA or A were determined to be above the pass level because of having no problem in actual use.

### (1) Thickness of surface protective layer

The thickness of the surface protective layer was measured using a method similar to the method described above.

Specifically, the decorative sheet was embedded in a resin such as a cold-curing epoxy resin and a UV curable resin to sufficiently cure the resin. Next, the resultant object was cut so that a cross section of the decorative sheet was visible, and mechanical polishing was performed to obtain a measurement surface.

Subsequently, an image of the surface protective layer in cross section was captured using a scanning electron microscope SIGMA 500 manufactured by Carl Zeiss Microscopy GmbH. The image was captured under conditions of: acceleration voltage of 0.5 keV (low acceleration voltage), imaging mode of SE2 mode, and magnification of 2,000 times. No sputtering was performed on the sample to be measured.

Next, the dimension of the surface protective layer in the width direction of the ridge portions and the area of the surface protective layer in the cross section were calculated from the image of the cross section. The thickness of the surface protective layer was calculated by dividing this area by this dimension. The thickness obtained in this way was equal to the thickness of the coating film made of the surface protective layer-forming coating liquid.

The thickness of the pigment-containing layer was measured using a method similar to the method described above.

### (2) Gloss

As a gloss, a specular gloss GS (60°) was measured using the Rhopoint IQ-S (manufactured by Rhopoint Instruments). The 60-degree gloss in the following Tables 1 and 2 refers to this specular gloss GS (60°).

### (3) Scratch resistance

Each decorative sheet was attached to a wood substrate B using a urethane-based adhesive. After that, a steel wool rubbing test was performed to evaluate scratch resistance. Specifically, with a load of 100 g imposed, the decorative sheet was rubbed with steel wool for 20 strokes, and scratches and gloss changes caused on the surface of the decorative sheet were visually examined.

The evaluation criteria were as follows.
AAA: No scratches or gloss changes were observed on the surface.
AA: Slight scratches or gloss changes were observed on part of the surface.
A: Slight scratches or gloss changes were observed on large parts of the surface.
B: Significant scratches or gloss changes were observed on the surface.

### (4) Water resistance

Each decorative sheet was attached to a wood substrate B using a urethane-based adhesive. Each decorative sheet, with water dropped onto the surface protective layer, was covered with a watch glass and left to stand for 24 hours. After that, water was wiped off from the surface protective layer and the decorative sheet was observed.

The evaluation criteria were as follows.
AAA: Stains or traces of water absorption were not observed at all.
AA: Stains or traces of water absorption were observed in part but they were difficult to see.
A: Stains or traces of water absorption were observed in part and they were relatively easily found.
B: Traces of water absorption were clearly observed throughout.

### (5) Bendability

The obtained decorative sheets were subjected to wrapping. The folded portions of the surface of each decorative sheet were observed using an optical microscope to examine whether blushing or cracking had occurred in the portions, and thus formability was evaluated. It should be noted that this wrapping formability corresponds to bendability.
The evaluation criteria were as follows.
AAA: No blushing or cracking was observed.
AA: Slight blushing was observed partly.
A: Blushing was observed partly.
B: Blushing was observed on the entire surface, or cracking was observed partly.

Evaluation results are shown in Tables 1 to 3. In the column of resin type in Tables 1 to 3, A-1 shows that SHIKOH (trademark) UV-W300 (Mitsubishi Chemical Corporation) was used as a resin, A-2 shows that UVPUD-7502E (UBE Corporation) was used as a resin, B shows that SETAQUA6411 (Daicel-Allnex Ltd.) was used as a resin, and C shows that WS-5661 (Mitsui Chemicals, Inc.) was used as a resin.

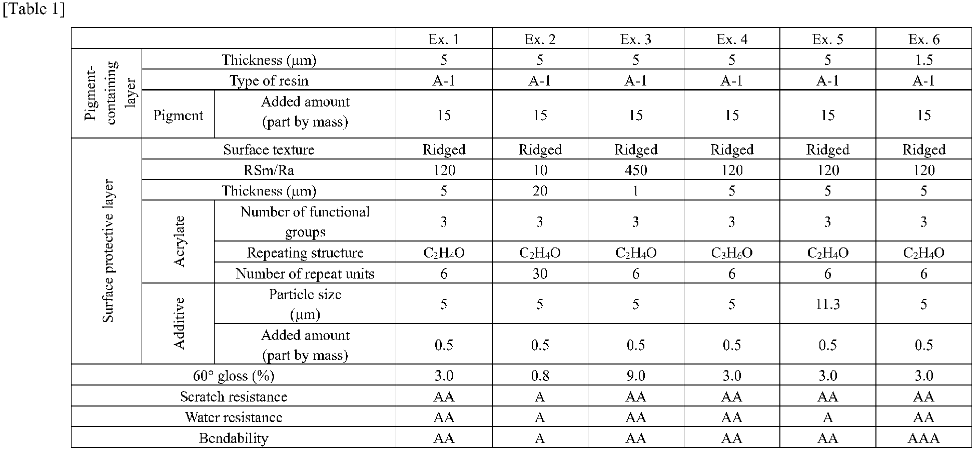

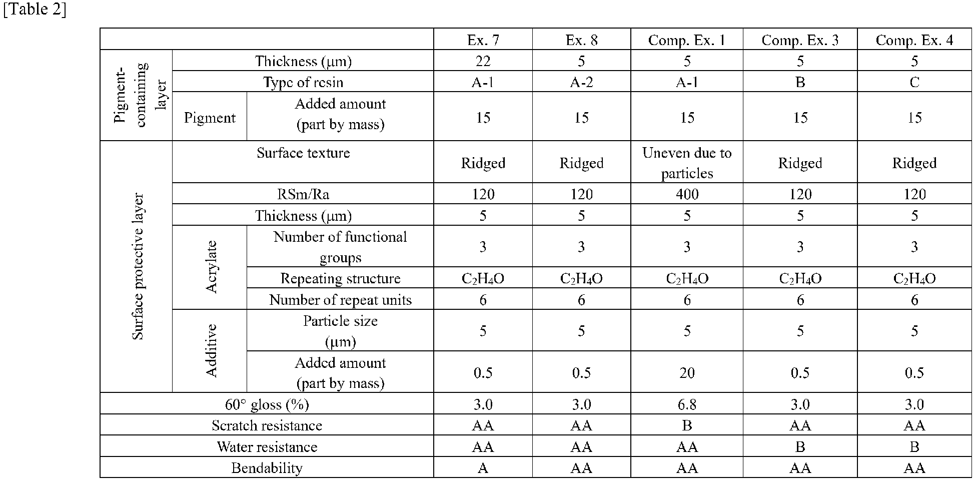

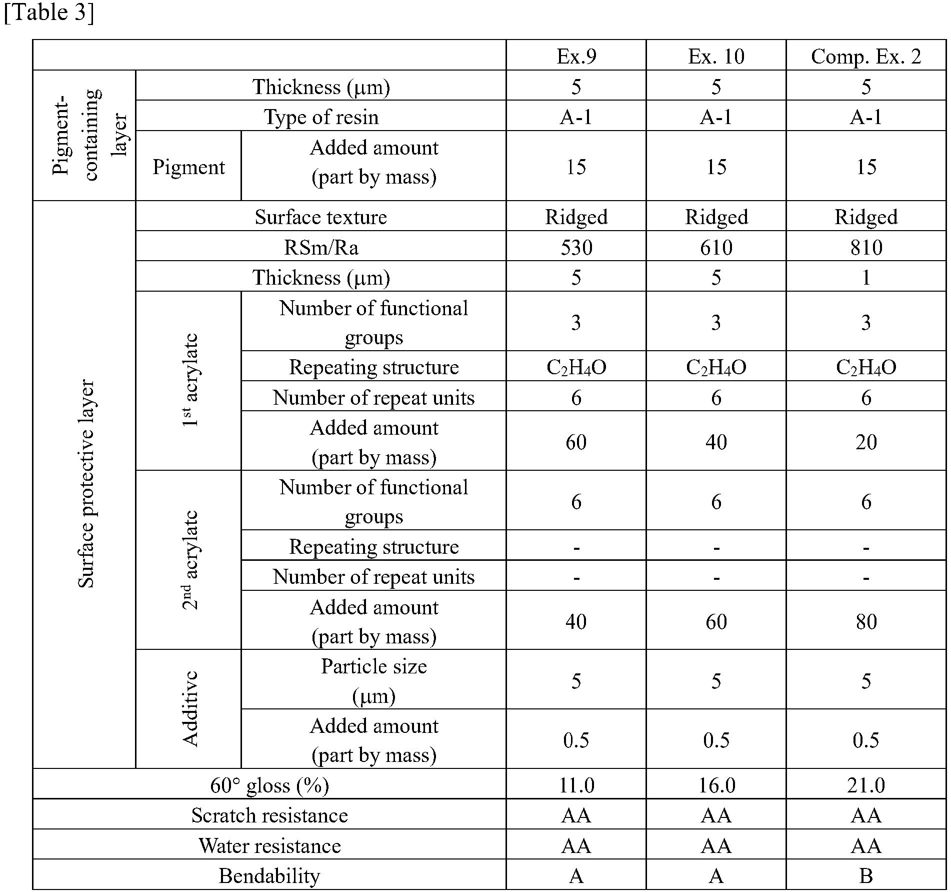

As shown in Tables 1 to 3, the decorative sheets of Examples 1 to 10 exhibited sufficient performance in all of low gloss properties, scratch resistance, water resistance, and formability. In contrast, the decorative sheet of Comparative Example 1 was insufficient in scratch resistance. The sheet of Comparative Example 2 was insufficient in low gloss properties and bendability. The sheets of Comparative Examples 3 and 4 were insufficient in water resistance.

### [Reference Signs List]

- 1: Decorative sheet
- 2: Primary film layer
- 3: Pigment-containing layer
- 4: Surface protective layer
- 4A: Core portion
- 4B: Ridge portion
- 11: Decorative material
- B: Substrate
- C: Point
- D: Point

## Claims

1. A decorative sheet, comprising
a primary film layer containing paper;
a pigment-containing layer provided on the primary film layer and containing a pigment and a cured product of a first ionizing radiation curable resin; and
a surface protective layer provided on the pigment-containing layer, wherein
the surface protective layer contains a cured product of a second ionizing radiation curable resin as a cured resin and has a surface provided with an uneven structure including a plurality of ridge portions each protruding in a ridge shape; and
the uneven structure has a ratio RSm/Ra in a range of 10 or more and 800 or less, the ratio RSm/Ra being a ratio between an average length RSm of roughness curve elements and an arithmetic mean roughness Ra.

2. The decorative sheet according to claim 1, wherein the first ionizing radiation curable resin contains an acrylate.

3. The decorative sheet according to claim 1 or 2, wherein the pigment-containing layer has a thickness in a range of 0.5 µm or more and 20 µm or less.

4. The decorative sheet according to any one of claims 1 to 3, wherein the surface protective layer has a thickness in a range of 2 µm or more and 20 µm or less.

5. The decorative sheet according to any one of claims 1 to 4, wherein the pigment-containing layer and the surface protective layer have a total thickness in a range of 3 µm or more and 40 µm or less.

6. The decorative sheet according to any one of claims 1 to 5, wherein when a mass of the first ionizing radiation curable resin is 100 parts by mass, a mass of the pigment is 3 parts by mass or more and 50 parts by mass or less.

7. The decorative sheet according to any one of claims 1 to 6, wherein the pigment comprises titanium oxide.

8. The decorative sheet according to any one of claims 1 to 7, wherein the second ionizing radiation curable resin contains an acrylate.

9. The decorative sheet according to any one of claims 1 to 8, wherein the second ionizing radiation curable resin contains a bifunctional or higher acrylate including a repeating structure.

10. The decorative sheet according to claim 9, wherein the number of repeat units of the repeating structure is 3 or greater.

11. The decorative sheet according to claim 9 or 10, wherein the number of repeat units of the repeating structure is 30 or less.

12. The decorative sheet according to any one of claims 1 to 11, wherein the surface protective layer further contains particles having an average particle size of 10 µm or less.

13. The decorative sheet according to claim 12, wherein when a mass of the second ionizing radiation curable resin is 100 parts by mass, a mass of the particles is in a range of 0.5 parts by mass or more and 20 parts by mass or less.

14. The decorative sheet according to any one of claims 1 to 13, wherein the surface protective layer has a gloss of 20.0 or less.

15. A decorative material, comprising
the decorative sheet according any one of claims 1 to 14; and
a substrate to which the decorative sheet is attached.

16. A method of producing a decorative sheet, comprising
forming a first coating film on a primary film layer containing paper, the first coating film containing a pigment and a first ionizing radiation curable resin;
forming a second coating film on the first coating film, the second coating film containing a second ionizing radiation curable resin as a resin; and
irradiating the second coating film with ionizing radiation or UV light to fully cure the second coating film.

17. The method of producing a decorative sheet according to claim 16, wherein fully curing the second coating film comprises
a first irradiation step of irradiating the second coating film with light having a wavelength of 200 nm or less; and
a second irradiation step of subsequently irradiating the second coating film either with ionizing radiation or with UV light having a wavelength longer than that of the light used in the first irradiation step.
